(19) Europäisches Patentamt
European Patent Office
Office européen des brevets

(11) **EP 2 265 554 B1**

(12) **EUROPÄISCHE PATENTSCHRIFT**

(45) Veröffentlichungstag und Bekanntmachung des Hinweises auf die Patenterteilung:
**19.12.2018   Patentblatt 2018/51**

(21) Anmeldenummer: **09741905.5**

(22) Anmeldetag: **11.05.2009**

(51) Int Cl.:
***C04B 11/26*** ^(2006.01)

(86) Internationale Anmeldenummer:
**PCT/EP2009/003320**

(87) Internationale Veröffentlichungsnummer:
**WO 2009/135687 (12.11.2009 Gazette 2009/46)**

(54) **VERFAHREN ZUR KALZINIERUNG VON PHOSPHORGIPS**

METHOD FOR CALCINATING PHOSPHOROUS PLASTER

PROCÉDÉ DE CALCINATION DE PLÂTRE PHOSPHORÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008   EP 08008733**

(43) Veröffentlichungstag der Anmeldung:
**29.12.2010   Patentblatt 2010/52**

(73) Patentinhaber: **Claudius Peters Projects GmbH 21614 Buxtehude (DE)**

(72) Erfinder:
• **GÖCKE,Volker 21702 Kakerbeck (DE)**

• **SCHULDT, Thomas 20149 Hamburg (DE)**

(74) Vertreter: **Glawe, Delfs, Moll Partnerschaft mbB von Patent- und Rechtsanwälten Postfach 13 03 91 20103 Hamburg (DE)**

(56) Entgegenhaltungen:
**EP-A- 1 547 984       EP-A- 1 747 814
WO-A-89/10185       WO-A-99/12861
DE-A1- 2 160 204       DE-A1- 3 537 049
FR-A- 2 153 928       GB-A- 2 299 522
US-A- 3 181 985       US-A- 4 502 901
US-A1- 2007 215 020**

**Beschreibung**

Die Erfindung betrifft ein Verfahren zum Kalzinieren von Phosphorgips oder anderen feuchten synthetischen Gipsen umfassend zwei Schritte, ein Kalzinieren des Guts in einem Kalzinierer und ein Nachkalzinieren des heißen Guts in einem Nachreaktor.

Zum Kalzinieren von z.B. Gips wird das Rohmaterial zerkleinert und in einem Reaktor gebrannt. Als Rohmaterial wird außer bergmännisch gewonnenem Naturgips im zunehmenden Maße sogenannter Recycling-Gips verwendet. Letzter fällt in großen Mengen bei der Rauchgasentschwefelung und bei der Säureherstellung, insbesondere von Phosphorsäure an. Gerade bei letztgenanntem tritt jedoch das Problem auf, dass er eine sehr hohe Feuchtigkeit aufweist. Das Angebot an Phosphorgips (oder anderen feuchten Gipsen) ist aber sehr groß, so dass ein erheblicher Bedarf an seiner Weiterverarbeitung, insbesondere zu Gipskartonplatten besteht.

Im Stand der Technik sind verschiedene Methoden zur Verarbeitung bekannt geworden. Eine erste besteht darin, den Feuchtegehalt durch Trocknung des Phosphorgipses zu reduzieren. Dies bietet den Vorteil, dass nach der Trocknung der Gips mit herkömmlichen Verfahren für Rauchgasentschwefelungsanlagen-Gips weiterverarbeitet werden kann. Dem steht als Nachteil gegenüber, dass zum Trocknen ein hoher Energieaufwand erforderlich ist. Ein solches Verfahren mit gesondertem Trockner, erster Mühle, Kalzinierer und zweiter Mühle ist aus der US 3,181,985 A bekannt. Das Trocknungsverfahren ist im Betrieb sehr teuer und für Phosphorgips letztlich unwirtschaftlich. Derartige Verfahren konnten sich daher nicht durchsetzen, und zwar aus gutem Grund im Anbetracht steigender Energiekosten.

Es ist auch versucht worden, die bekannten Verfahren für Rauchgasentschwefelungsanlagen-Gips ohne Trocknung des feuchten Phosphorgipses anzuwenden. Es hat sich aber gezeigt, dass die so hergestellten Gipskartonplatten zu feucht sind und eine zu geringe Biegefestigkeit aufweisen. Diese Methode ist damit allenfalls zur Herstellung von Stuckgips brauchbar, nicht aber für Gipskartonplatten.

Weiter ist vorgeschlagen worden, den zugeführten Phosphorgips nur zu einem Teil einer Vorbehandlung zu unterziehen (DE 2 160 204 A). Ein Teilstrom wird kalziniert und mit einem zweiten, unkalzinierten Teilstrom vermischt. Dazu erfolgt eine Pelletierung des Kalzinierten mit dem unkalzinierten Strom. Während einer mehrtägigen Zwischenlagerung erfolgt eine Rekristallisation, und schließlich erfolgt eine Weiterverarbeitung durch Kalzinieren auf einem Rostband. Dieses vorbekannte Verfahren ist damit nicht nur umständlich durch die Pelletierung, sondern auch noch zeitaufwendig.

Schließlich wird dem feuchten Phosphorgips Naturgips zugemischt. Der hierzu erforderliche Anteil an Naturgips ist erheblich, und muss häufig bis zu 70 % betragen. Da das Aufkommen an Naturgips viel geringer ist als das an Phosphorgips, ist diese Methode teuer und nicht zur Lösung der Verarbeitung der großen Mengen an Phosphorgips geeignet.

Aus EP 1 547 984 A1 und WO 99/12861 A1 sind jeweils Vorrichtungen und Verfahren bekannt, bei denen Gips zwischen eigentlicher Kalzinierung und Trocknung in einer feuchten Umgebung nachbehandelt wird.

Es stellt sich die Aufgabe, ein verbessertes Verfahren zur Verarbeitung von Phosphorgips, insbesondere zur Herstellung von Gipskartonplatten anzugeben.

Die erfindungsgemäße Lösung liegt in den Merkmalen des unabhängigen Anspruchs. Vorteilhafte Weiterbildungen sind Gegenstand der abhängigen Ansprüche.

Bei einem Verfahren zum Kalzinieren von Phosphorgips oder anderen feuchten synthetischen Gipsen als zu verarbeitendes Gut umfassend ein Zuführen des Guts, ein Kalzinieren des Guts in einem Kalzinierer mit einem thermischen Zerkleinern und ein Nachkalzinieren des heißen Guts mit einem Nachzerkleinern ist erfindungsgemäß vorgesehen, dass das Nachzerkleinern als Feinzerkleinerung zusammen mit dem Nachkalzinieren in einem gemeinsamen Nachreaktor unter Zuführung von Feuchtgas erfolgt.

Bei einem herkömmlichen Kalzinierverfahren kann eine ausreichende Qualität nur erreicht werden, wenn der sehr feuchte synthetische Gips aufbereitet wird (durch Trocknung, Zugabe von Zuschlagstoffen wie Ammonium, etc.), was recht aufwendig ist.

Hier setzt die Erfindung an, indem in einer nachgeschalteten Prozessstufe ein Nachkalzinieren mit einem Feinzerkleinern kombiniert wird.

Die Erfindung beruht auf der Erkenntnis, dass im Gegensatz zu nicht kalziniertem Gips der kalzinierte Gips eine wesentlich geringere Festigkeit seiner Kornpartikel aufweist. Bei dem vorgeschalteten Kalzinieren des Phosphorgipses bzw. anderer gleichartiger synthetischer Gipse weisen die Kristalle eine längliche Form auf und es tritt wegen der kurzen Verweilzeit nur eine geringe Partikelzerkleinerung auf. Durch die rasche Erhitzung verbunden mit Abtrennen von kristallin gebundenem Wasser kann es aber zu einer gewissen thermischen Zerkleinerung bzw. Rissbildung in den Gipspartikeln kommen. Im Nachreaktor werden erfindungsgemäß die durch die starke thermische Beanspruchung gebildeten Spannungsrisse als eine Art "Sollbruchstellen" genutzt, um die Gipspartikel in sehr feine Kornpartikel aufzubrechen ("Feinzerkleinern"). Zusätzlich wird durch die Zuführung von Feuchtgas die Voraussetzung geschaffen, um die beim Kalzinieren entstandenen unerwünschten Phasen Anhydrit zu rehydrieren bzw. Dihydrat in Halbhydrat umzuwandeln. Durch die parallele Durchführung mit der Nachkalzination ergibt sich der kombinatorische Vorteil, dass nicht nur die Feinheit gesteigert wird, sondern gleichzeitig auch eine Oberflächenvergrößerung erreicht wird, welche den Zugang von Wärme und Wasserdampf erleichtert, so dass der chemische Prozess der Nachkalzination besser und schneller ablaufen kann. Die Prozesse des Aufbrechens und des Nachkalzinierens begünstigen sich dabei gegenseitig durch die kombinierte Ausführung in einem gemeinsamen Reaktor derart positiv, dass überraschenderweise auch sehr feuchter Gips, wie Phosphorgips, ohne vorherige Trocknung mit geringem Zeit- und Energieaufwand nutzbar gemacht werden kann als hochqualitativer Gips mit hohem Gehalt an Halbhydrit.

Insgesamt sind es drei Schritte, auf die in Kombination die Erfindung beruht. Zum einen erfolgt in dem Kalzinierer eine Kalzination, die nicht vollständig ist und bei der die erreichte Feinheit keine Rolle spielt. In einem zweiten Schritt erfolgt ein Nachkalzinieren in dem Nachreaktor. Dies führt zu einer Vergleichmäßigung des Produkts, da eine Teilkalzinierung, d. h. unvollständige Umwandlung von Dihydrat zu Halbhydrat, im Nachreaktor vervollständigt wird, und dabei zugleich parasitär bei dem Kalzinieren entstandenes Anhydrit (AIII) zu Halbhydrat rückgeführt wird. Bei diesem Schritt kann eine längere Verweilzeit im Interesse einer hohen Produktqualität gewählt werden, um Schwankungen beim vorgelagerten Kalzinieren im Hinblick auf Dihydrat- bzw. Anhydrit-Anteile auszugleichen. Da das Gut durch die vorherige Prozessstufe und das Nachkalzinieren, wie erläutert, stark beansprucht ist, macht sich die Erfindung dies und die vergleichsweise lange Verweilzeit im Nachreaktor zu Nutze, um das Gut fein zu zerkleinern. Hierbei können Zielfeinheiten erreicht werden, die deutlich über denen einer Durchlaufmühle liegen. Der für die Weiterverarbeitung, insbesondere zu Gipskartonplatten, bedeutende Blaine-Wert kann damit deutlich gesteigert werden. Überraschenderweise hat sich gezeigt, dass sich hierbei günstige Kristallpartikelformen ergeben, die zu einer hohen Festigkeit der daraus hergestellten Gipskartonplatten führen.

Dem Nachreaktor braucht hierbei keine Fremdenergie zugeführt zu werden. Er kann wärmepassiv ausgeführt sein. Dies bedeutet in Verbindung mit dem vernachlässigbaren Energieaufwand für das Feinzerkleinern, dass dank der erfindungsgemäßen Interaktion von Nachkalzinieren und Zerkleinern auf sehr energiesparende Weise Phosphorgips oder andere feuchte Gipsarten zur Verwendung als Stuck-/Putzgips oder zur Verarbeitung für Gipskartonplatten aufbereitet werden können.

Das Ergebnis der Nachbehandlung lässt sich weiter verbessern, wenn dem Gut im Nachreaktor Wärmeenergie in Form von Systemabluft zugeführt wird. Hierbei wird vorzugsweise Abwärme des vorgeschalteten Kalzinierers oder eines nachgeschalteten Kühlers verwendet. Bei Bedarf kann feuchte Abluft zugeführt werden, um den Gehalt an Wasserdampf bei der Nachkalzination zu erhöhen.

Nachfolgend seine einige verwendete Begriffe erläutert:
Unter Feinzerkleinern wird ein Behandeln mit einer schnelldrehenden Mischeinrichtung, wie einen Turbomischer, verstanden. Sie ist so ausgelegt, dass die charakteristischen länglichen Kristalle in Bruchstücke zerteilt werden.

Feuchtgas ist ein solches Gas, das einen Wassergehalt von mindestens 30 % (es handelt sich hierbei um Volumenprozent) aufweist.

Wärmepassiv im Sinne dieser Erfindung bedeutet, dass im Betrieb keine Fremdenergie zugeführt werden muss, sondern lediglich Wärmeenergie, die in anderen Prozessstufen als Verlustenergie entsteht, zugeführt wird. Insbesondere zeichnet sich ein wärmepassives Bauteil also durch Nichtvorhandensein von Heizeinrichtungen für Prozesswärme aus.

Systemabluft ist solches Gas, das in anderen Prozessstufen der Kalzieranlage als Abluft anfällt; insbesondere fällt hierunter Abluft des Kalzinierers und eines Kühlers. Nicht hierunter fällt von einer Heizeinrichtung eigens erwärmtes Gas.

Vorzugsweise werden als Einrichtung zum Feinzerkleinern Turbomischer benutzt die mit mindestens 1500 1/min rotieren. Sie bieten den Vorteil eines vergleichsweise einfachen Aufbaus und einer guten Wirkung über einen großen Drehzahlbereich. Des Weiteren sind sie nur wenig anfällig in Bezug auf Verstopfung und können somit ohne Risiko ab- und wieder angeschaltet werden.

Das Feinzerkleinern braucht nicht unbedingt im Dauerbetrieb durchgeführt werden. Es hat sich gezeigt, dass es in vielen Fällen genügt, eine getaktete Feinzerkleinerung durchzuführen. Damit kann durch Zu- und Abschalten der Turbomischer oder durch Drehzahländerung die Feinheit des Produkts bestimmt werden. Dies ermöglicht auch eine unabhängige Einstellung von Verweilzeit zur Nachkalzinierung und der gewünschten Feinheit durch dasFeinzerkleinern.

Es hat sich bewährt, in dem Nachreaktor eine Gutdichte einzustellen, die mindestens doppelt so hoch ist wie die beim Kalzinieren. Bewährt hat sich eine Dichte von mindestens 0,4 kg/m$^3$. Damit wird die Wahrscheinlichkeit von Prallstößen und damit die Wirkung der Feinzerkleinerung und - wie erläutert - der Nachkalzinierung erhöht. Vorzugsweise wird die Verweilzeit im Nachreaktor so bestimmt, dass sie mindestens 10, vorzugsweise 50 bis 100 mal größer ist als die im Kalzinierer. Bewährt hat sich eine Verweilzeit von 15 bis 20 min.

Erfindungsgemäß wird das Feinzerkleinern derart durchgeführt, dass ein Blaine-Wert des Produkts verdoppelt wird. Weist beispielsweise der Phosphorgips nach der Kalzinierung in dem Kalzinierer einen Blaine-Wert im Bereich 2000 bis 4500 cm2/g auf, so wird er im Nachreaktor auf Werte von über 7000 cm2/g erhöht.

Das zu kalzinierende Gut wird in dem Kalzinierer auf eine Temperatur von mindestens 150°C, vorzugsweise zwischen 150°C und 160°C, erhitzt. Bei dieser Temperatur wird der Kalzinierungsprozess sicher in Gang gesetzt wird und das Gut hat nach dem Verlassen des Kalzinierers und bei der Zufuhr in den Nachreaktor noch eine Temperatur von in der Regel 100°C oder mehr.

Weiter kann vorzugsweise warme Systemabluft zugeführt werden, beispielsweise von dem Kalzinierer oder dem Kühler. Damit wird eine Nachkalzinierung im Nachreaktor ohne zusätzliche Beheizung erreicht. Der Nachreaktor ist mit Vorteil wärmepassiv ausgeführt. Damit kann eine beträchtliche Energieeinsparung erreicht werden, zumal herkömmlicherweise Temperaturen von 170°C und mehr beim Kalzinieren erforderlich sind.

Es sei noch angemerkt, dass die Erfindung mit der Nachkalzination in dem Nachreaktor außerdem eine Vergleichmäßigung erreicht. Damit erhöht sich nicht nur die Qualität des kalzinierten Guts, sondern es können auch Zulaufschwankungen beim Zuführen des Rohprodukts ausgeglichen werden. Schwankungen, insbesondere solche in Bezug auf die Feuchtigkeit des zugeführten Guts, schlagen also nicht mehr negativ auf die Produktqualität durch.

Der Nachreaktor sorgt neben der Nachkalzinierung auch für eine Durchmischung des Gutes. Dazu ist der Nachreaktor vorzugsweise mit mindestens einer Fluidisiereinrichtung ausgestattet. Dadurch kann ein Anbacken bzw. eine Ausbildung toter Zonen im Reaktor verhindert werden und es kommt zu einer intensiveren Durchmischung. Als Fluidisiergas kann ebenfalls Abluft des Kalzinierers dienen. Es ist aber auch möglich, Umgebungsluft mit der Abluft zu vermischen oder der Fluidisiereinrichtung getrennt von der Abluft zuzuführen.

Eine zur Durchführung des soeben beschriebenen Verfahrens geeignete Anlage ist zum Verarbeiten von Phosphorgips oder anderen feuchten synthetischen Gipsen ausgebildet, und umfasst einen Kalzinierer, eine Transportleitung und einen in Prozesslaufrichtung dahinter liegenden gesonderten Nachreaktor, wobei in dem Nachreaktor eine Kalziniereinrichtung mit einer Feinzerkleinerungseinrichtung kombiniert ist, und dass der Nachreaktor eine Speisung für Feuchtgas aufweist. Zur näheren Erläuterung dieser Anlage wird auf vorstehende Beschreibung verwiesen.

Ein zur Durchführung dieses Verfahrens geeigneter Nachrüstreaktor umfasst eine Zufuhreinrichtung für zumindest teilkalziniertes heißes Gut, einen Reaktionsraum und eine Abfuhreinrichtung für das vollkalzinierte Gut, wobei der Nachrüstreaktor mit einer Feinzerkleinerungseinrichtung für das Gut und einer Speisung für Feuchtgas versehen ist, und dass die Feinzerkleinerungseinrichtung Turbomischer aufweist, sowie eine Steuerung vorgesehen ist, die die Gaszufuhr so einstellt, dass die Dichte mindestens 0.4 kg/m³ beträgt. Zur Erläuterung wird auf obige Ausführungen zum Verfahren verwiesen.

Die Erfindung wird nachfolgend näher erläutert unter Bezugnahme auf die beigefügte Zeichnung, in der vorteilhafte Ausführungsbeispiele dargestellt sind. Es zeigen:

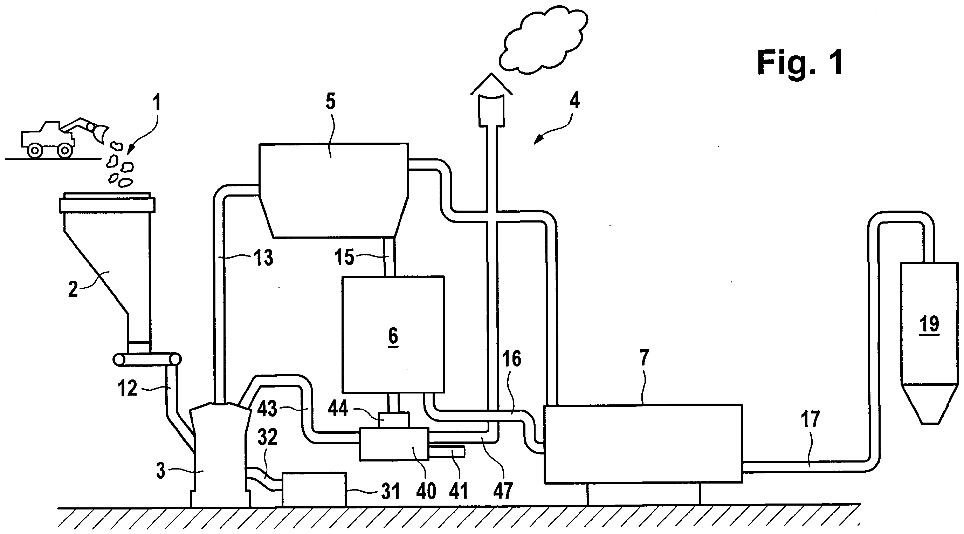

Fig. 1    eine schematische Übersichtsdarstellung eines Ausführungsbeispiels einer zur Durchführung des erfindungsgemäßen Verfahrens geeignete Kalzinieranlage; und

Fig. 2    eine Schnittansicht eines zur Durchführung des erfindungsgemäßen Verfahrens geeigneter Nachreaktors der Kalzinieranlage gemäß Fig. 1.

Das erfindungsgemäße Verfahren sei anhand eines Ausführungsbeispiels einer dafür geeigneten Anlage zum Kalzinieren von Gips erläutert. Rohmaterial für das zu kalzinierende Gut wird an einer Aufgabestelle 1 in die Kalzinieranlage eingebracht. Bei dem Rohmaterial kann es sich insbesondere um Phosphorgips handeln, wie er bei der Herstellung von Phosphorsäure anfällt oder um anderen feuchten synthetischen Gips. Unter feucht wird hierbei verstanden, dass der dem Verfahren zugeführte Gips einen Wasserwert von mindestens 1,0 aufweist. Das Anwendungsgebiet der Erfindung ist nicht zwingend auf solchen Gips beschränkt, sondern erstreckt sich auch auf andere Arten von synthetischem oder recyceltem Gips. Von der Aufgabestelle 1 gelangt das Phosphorgips-Rohmaterial an ein oberes Ende eines Speichersilos 2. Dieser ist erhöht angeordnet und befindet sich oberhalb einer Kalziniermühle 3.

Der Phosphorgips wird über eine Leitung 12 in den Kalzinierer eingebracht, der als Kalziniermühle 3 ausgebildet ist. In der Kalziniermühle 3 wird der Gips zerkleinert und kalziniert. Die Kalzinierung erfolgt als Flash-Kalzinierung. Dies bedeutet eine kurze Verweilzeit von unter 10 Sekunden bei einer Temperatur von 150°C bis 160°C, also oberhalb der eigentlichen Kalziniertemperatur. Dazu ist an die Kalziniermühle 3 ein Heißgasgenerator 31 über eine Zuleitung 32 angeschlossen.

Nach erfolgter Flash-Kalzinierung bei einer Verweildauer von nur 3 Sekunden (die erfindungsgemäß nicht vollständig zu sein braucht) wird der über 100°C-heiße Gips über eine Steigleitung 13 von der Kalziniermühle 3 zu einer Filteranlage 5 geführt. Von dort führt eine Transportleitung 15 an einen erfindungsgemäßen Nachreaktor 6. Dort verweilt es für 20 Minuten, und wird in dieser Zeit ohne Fremdenergiezufuhr (wärmepassiv) nachkalziniert und feinzerkleinert. Die Funktionsweise des ungeheizten Nachreaktors 6 wird noch näher beschrieben. Von dem Nachreaktor 6 wird der immer noch heiße Gips über eine Leitung 16 an ein Aufgabeende eines Drehrohrkühlers 7 transportiert. Nach Durchlaufen des Kühlers 7 wird der gekühlte und nun vollständig kalzinierte Gips über eine Verteilerleitung 17 in ein Lagersilo 19 geleitet. Aus diesem kann nach Bedarf entnommen werden. Zur Abführung von Abwärme ist eine Anlage für Systemabluft 4 vorgesehen. An sie ist die Kalziniermühle 3, der Filter 5 und der Kühler 7 angeschlossen.

Weiter ist ein Mischer 40 an ein Netz für Systemabluft 4 angeschlossen. Über eine Leitung 43 wird heiße Abluft mit einer Temperatur von 150°C bis 170°C von der Kalziniermühle 3 und über eine Leitung 47 von dem Kühler 7 zugeführt. Eine Leitung 41 ist für Zuführung von Umgebungsluft vorgesehen, um so nach Bedarf Umgebungsluft zur Senkung der Ablufttemperatur zuzuführen. Das dadurch entstehende Abluftgemisch gelangt in einen Wasserabscheider 44. In diesem Wasserabscheider 44 kann dem Gasgemisch je nach Bedarf entweder Feuchtigkeit entzogen oder zugesetzt werden. Das so behandelte feuchte Luftgemisch wird durch die Leitung 49 einem Feuchtgas-Anschluss 69 an dem Nachreaktor 6 als Reaktionsgas und ggf. Fluidisiergas zugeführt.

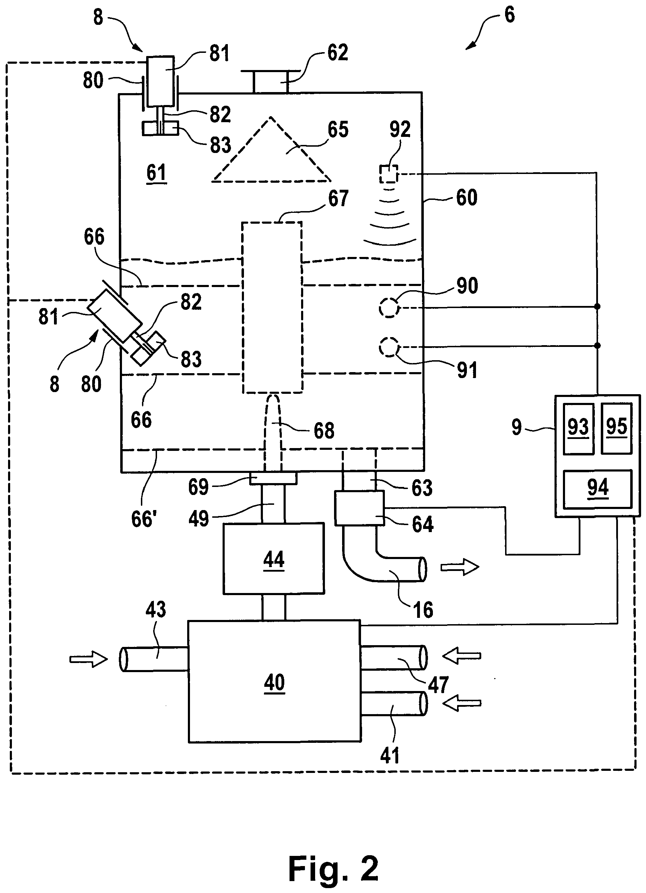

Ein Ausführungsbeispiel für den zur Durchführung des erfindungsgemäßen Verfahrens geeigneten Nachreaktor 6 ist in Figur 2 näher dargestellt. Der Nachreaktor 6 ist ausgelegt für einen Durchsatz von ca. 35 m³ je Stunde. Er umfasst als Hauptkomponenten ein Gehäuse 60, welches einen Arbeitsraum 61 umschließt, und eine am oberen Ende angeordnete Zufuhreinrichtung 62, in welche die Transportleitung 15 angeschlossen ist, und eine am unteren Ende angeordnete Abfuhreinrichtung 63, welche den nun vollständig kalzinierten Gips über eine Leitung 16 abtransportiert. Die Verweilzeit im Nachreaktor kann dank der wärmepassiven Ausgestaltung an sich beliebig gewählt werden und beträgt vorzugsweise 10 bis 30 Minuten, weiter vorzugsweise 15 bis 25, weiter vorzugsweise 20 Minuten. Die Größe des Arbeitsraums 61 ist so auf den Durchsatz der Kalziniermühle 3 abgestimmt, dass sich eine etwa dreimal so hohe Dichte des Guts bezogen auf die Dichte in den Kalziniermühle 3 während des Betriebs einstellt. Bewährt hat sich eine Dichte von 0,5 kg/m³ bei einer Dichte von 0,17 kg/m³ in der Kalziniermühle 3.

Im dargestellten Ausführungsbeispiel ist das Gehäuse 60 von zylinderförmiger Gestalt mit einem Durchmesser von etwa 3 Metern, wobei die Zufuhreinrichtung 62 in einer oberen Stirnwand und die Abfuhreinrichtung 63 in einer unteren Stirnwand, dem Boden, angeordnet sind. Die Höhe beträgt etwa 5 Meter. In dem Inneren des gleichfalls zylinderförmigen Arbeitsraums 61 sind mehrere Fluidisierböden 66 in horizontaler Richtung angeordnet. Die Fluidisierböden 66 umfassen im Wesentlichen einen Boden mit darunter angeordneten Hohlkammern zur Zuführung von Fluidisiergas, welches durch Öffnungen in dem Fluidisierboden 66 nach oben austreten kann, und dabei eine auf dem Fluidisierboden 66 aufliegende Schicht des zu behandelnden Guts durchströmt und fluidisiert. Am unteren Ende des Arbeitsraums 61 ist ein weiterer Fluidisierboden 66' angeordnet, der zusätzlich Durchbrechungen zum Anschluss der Abfuhreinrichtung 63 aufweist.

Im oberen Bereich des Arbeitsraums 61 befindet sich in Fallrichtung unmittelbar unterhalb der Zufuhreinrichtung 62 ein Dispersionselement 65. Es ist als ein Kegel ausgeführt. Seine Achse liegt koaxial zur Achse des zylindrischen Arbeitsraums 61, wobei die Spitze nach oben zu der Zufuhreinrichtung 62 weist. Zugeführtes Gut fällt in seiner Fallbewegung auf die konische Mantelfläche des Kegels 65, und wird dadurch dank der rotationssymmetrischen Gestaltung gleichmäßig in alle Richtungen nach radial abgelenkt.

In der Achse des zylindrischen Arbeitsraums 61 ist unterhalb des Kegels 65 ein von unten nach oben verlaufendes Steigrohr 67 vorgesehen. Es ist so angeordnet, dass es die beiden Fluidisierböden 66 durchquert. Das Steigrohr weist einen metallischen Rohrmantel auf, der einen freien Querschnitt von 60 cm aufweist. Die Länge des Steigrohrs 67 ist etwa 3 Meter, wobei sein unteres Ende etwa 50 cm über dem Boden des Arbeitsraums 61 angeordnet ist. In dem Boden des Gehäuses 60 ist in der Achse und unterhalb des Steigrohrs 67 eine zentrale Düse 68 vorgesehen, der die über den Abluft-Anschluss 69 zugeführte Abluft von dem Mischer 40 zugeführt wird. Die Düse 68 richtet ihren Gasstrom in das Steigrohr 67, wodurch dort der statische Druck abfällt und sich im Arbeitsraum 61 eine Umwälzbewegung ausbildet. Die über den freien Raum zwischen der Düse 68 und in dem Steigrohr strömende Abluft reißt Partikel des Guts aus der Umgebung mit, wodurch die mitgerissenen Partikel des Guts wieder in den oberen Bereich in den Arbeitsraums 61 oberhalb der Fluidisierböden 66 befördert werden. Es bildet sich damit eine Umwälzbewegung, indem das über die Fluidisierböden 66 im äußeren Bereich des Arbeitsraums 61 sich nach unten bewegende Gut mittels des Steigrohrs 67 und dem ihm zugeführten Abluftstrom wieder nach oben transportiert wird. Durch diese Umwälzbewegung kann unter Ausnutzung der Restwärme des über die Zufuhreinrichtung 62 eintretenden Guts eine Nachkalzinierung erreicht werden.

An dem Mantel des Gehäuses 60 sind etwa auf einem Drittel der Höhe umlaufend mehrere Turbomischer 8 angeordnet, die in den Arbeitsraum 61 ragen und als Feinzerkleinerer fungieren. Weitere in den Arbeitsraum 61 ragende Turbomischer 8 können in dem Deckel angeordnet sein. Dazu weist das Gehäuse 60 bzw. der Deckel Anschlussstutzen 80 auf, in die Motorsätze 81 der Turbomischer 8 eingesetzt sind. Sie treiben jeweils eine in den Arbeitsraum 61 ragende Welle 82 an und versetzen sie in schnelle Drehung. Die Motorsätze 81 sind dazu ausgebildet, die Welle 82 mit variabler Drehzahl anzutreiben. An dem freien Ende der Welle 82 sind eine Mehrzahl (im dargestellten Beispiel vier) Mischflügel 83 angeordnet. Sie sind plattenartig ausgeführt. Die Welle 82 ist in ihrer Länge so bemessen, dass die Mischflügel etwa in der Mitte des Freiraums zwischen Steigrohr 67 und der Wand des Gehäuses 60 angeordnet sind.

In dem Boden des Gehäuses 60 ist die Abfuhreinrichtung 63 mit Auslassstellen angeordnet. Die Auslassstellen umfassen einen Aktuator 64 zum Schließen oder Öffnen der Auslassstelle. Der Aktuator 64 ist mit einer Steueranlage 9 verbunden.

Die Steueranlage 9 umfasst ein Temperatur-/Feuchtekontrollmodul 93 und ein Verweilzeitmodul 94. An dem Nachreaktor 6 angeordnet sind ein Temperatursensor 90, ein Feuchtesensor 91 und ein Radarhöhensensor 92, welche an die Steueranlage 9 angeschlossen sind. Die Steueranlage 9 verknüpft die gemessenen Werte und wirkt auf den Mischer 40 ein. Außerdem umfasst die Steueranlage 9 ein Zerkleinerungsmodul 95, an welches die Homogenisatoren 8 angeschlossen sind.

Weiter reguliert die Steueranlage 9 die Zuführungen für die Fluidisierluft und die Aktuatoren 64 für die Abfuhr des Guts.

Das Temperatur- und Feuchtemodul 93 ist dazu ausgebildet, über den Temperatursensor 90 und den Feuchtesensor 91 die Temperatur und Feuchte im Nachreaktor 6 zu bestimmen. Zur Temperaturerhöhung wird Systemabluft 4 zugeführt und zur Temperatursenkung Umgebungsluft. Soll dabei die Feuchtigkeit erhöht werden, wird feuchte Abluft aus der Kalziniermühle 3 zugesteuert bzw. es wird auf trockenere Abluft von anderen Prozessstufen, insbesondere des Kühlers 7 zurückgegriffen. Damit wird erreicht, dass der von der Kalziniermühle 3 kommende Gips unter Nutzung seiner eigenen Wärme und der der zugeführten Abluft kontrolliert nachkalziniert wird. Von der Kalziniermühle 3 nur teilweise kalzinierter Gips wird nachkalziniert, das heißt die Umwandlung Dihydrat zu Halbhydrat wird vervollständigt, und eventuell vorhandenes Anhydrit (AIII) wird zu Halbhydrat.

Gleichzeitig steuert das Zerkleinerungsmodul 95 über die Turbomischer 8 den Zerkleinerungsgrad der Partikel in dem Arbeitsraum 61. Dazu kann das Zerkleinerungsmodul 95 ein Taktsteuergerät umfassen, welches die Turbomischer zeitweise an- und abschaltet. Damit kann die gewünschte Feinheit des Produkts eingestellt werden. Vorzugsweise erfolgt die Betätigung der Turbomischer 8 so lange, bis ein gewünschter Blaine-Wert erreicht ist. Dies kann durch Messung oder durch Zeitablauf anhand von Erfahrungswerten bestimmt werden.

Mittels des Radarhöhensensors 92 steuert die Steueranlage 9 die Abfuhreinrichtung 63 so an, dass der Füllstand und die Verweildauer des Guts in dem Nachreaktor 6 geregelt wird.

Damit kann eine Vergleichmäßigung und Verbesserung der Qualität des kalzinierten Gipses erreicht werden. Zum einen ergibt sich eine Vergleichmäßigung durch Ausgleich kurzzeitiger Schwankungen dank der durch den Aufenthalt im Arbeitsraum 61 erreichten Pufferung. Weiter ergibt sich durch die Homogenisierung eine günstigere Kristallstruktur, und es wird eine Absenkung des Wassergipswerts auf Werte wie bei der Verarbeitung von Natur-Gips und eine Erhöhung der Biegesteifigkeit erreicht. Beispielsweise kann bei feuchtem Phosphorgips ein Wassergipswert von 0,7 und eine Biegefestigkeit von 3 N/mm2 erreicht werden, gegenüber einem Wassergipswert von 1,3 und eine Biegefestigkeit von nur 1 N/mm2 ohne die erfindungsgemäße Homogenisierung.

Der in Figur 2 dargestellte Nachreaktor 6 kann auch als Nachrüstreaktor zum Einbau in bestehende Kalzinieranlagen fungieren.

**Patentansprüche**

**1.** Verfahren zum Kalzinieren von Phosphorgips oder anderen feuchten synthetischen Gipsen als zu verarbeitendes Gut, umfassend

    a) ein Zuführen des Guts,
    b) Kalzinieren des Guts in einem Kalzinierer (3),
    c) Zerkleinern,
    d) Nachkalzinieren des heißen Guts in einem Nachreaktor (6), und
    e) Nachzerkleinern,

**dadurch gekennzeichnet, dass**
das Nachzerkleinern als Feinzerkleinerung zusammen mit dem Nachkalzinieren in einem gemeinsamen Nachreaktor (6) unter Zuführung von Gas mit einem Wassergehalt von mindestens 30 Volumenprozent derart erfolgt, dass der Blaine-Wert des Guts verdoppelt wird.

**2.** Verfahren nach Anspruch 1,
**dadurch gekennzeichnet, dass**
zur Feinzerkleinerung Turbomischer (8) verwendet, die vorzugsweise mit mindestens 1500 1/min rotieren.

**3.** Verfahren nach Anspruch 1 oder 2,
**dadurch gekennzeichnet, dass**
im Nachreaktor (6) eine fluidisierte Dichte des Guts eingestellt wird, die mindestens doppelt so hoch ist wie in dem Kalzinierer (3).

**4.** Verfahren nach Anspruch 1, 2 oder 3
**dadurch gekennzeichnet, dass**
die Verweilzeit im Nachreaktor (6) mindestens 10 mal, vorzugsweise 50 bis 100 mal, größer ist als die Verweilzeit im Kalzinierer (3).

**5.** Verfahren nach Anspruch 1,
**dadurch gekennzeichnet, dass**
der Blaine-Wert auf einen Wert von mindestens 6000 $\dfrac{cm^2}{g}$, vorzugsweise 7000 $\dfrac{cm^2}{g}$ durch die Feinzerkleinerung erhöht wird.

**6.** Verfahren nach einem der Ansprüche 1 bis 5,
**dadurch gekennzeichnet, dass**
dem Nachreaktor (6) Systemabluft zugeführt wird und
im übrigen der Nachreaktor (6) ungeheizt betrieben wird.

**Claims**

**1.** Method for calcining phosphorus gypsum or other moist synthetic gypsums as material to be processed, comprising

a) supplying the material,
b) calcining the material in a calciner (3),
c) comminuting,
d) post-calcining the hot material in a downstream reactor (6), and
e) post-comminuting,

**characterized in that**
the post-comminution is performed as fine comminution together with the post-calcination in a shared downstream reactor (6) while supplying gas with a water content of at least 30 percent by volume such that the Blaine value of the material is doubled.

2. Method according to Claim 1,
**characterized in that**
turbomixers (8), which preferably rotate at at least 1500 rpm, are used for the fine comminution.

3. Method according to Claim 1 or 2,
**characterized in that**
a fluidized density of the material that is at least twice as high as in the calciner (3) is set in the downstream reactor (6).

4. Method according to Claim 1, 2 or 3,
**characterized in that**
the dwell time in the downstream reactor (6) is at least 10 times, preferably 50 to 100 times, greater than the dwell time in the calciner (3).

5. Method according to Claim 1,
**characterized in that**
the Blaine value is increased to a value of at least

6000 $\dfrac{cm^2}{g}$ , preferably 7000 $\dfrac{cm^2}{g}$ by the fine comminution.

6. Method according to one of Claims 1 to 5,
**characterized in that**
waste system air is supplied to the downstream reactor (6) and otherwise the downstream reactor (6) is operated unheated.

**Revendications**

1. Procédé de calcination de plâtre phosphoré ou d'autres plâtres synthétiques humides en tant que produit à traiter, comprenant :

a) une introduction du produit,
b) la calcination du produit dans un calcinateur (3),
c) le broyage,
d) la calcination secondaire du produit chaud dans un réacteur secondaire (6), et
e) le broyage secondaire,

**caractérisé en ce que**
le broyage secondaire a lieu sous la forme d'un broyage fin conjointement avec la calcination secondaire dans un réacteur secondaire commun (6) avec introduction d'un gaz ayant une teneur en eau d'au moins 30 pour cent en volume, de telle sorte que la valeur de Blaine du produit soit doublée.

2. Procédé selon la revendication 1,
**caractérisé en ce que**
des turbomélangeurs (8) qui tournent de préférence à une vitesse d'au moins 1 500 1/min sont utilisés pour le broyage fin.

3. Procédé selon la revendication 1 ou 2,
**caractérisé en ce qu'**une
densité fluidisée du produit qui est au moins le double de celle dans le calcinateur (3) est ajustée dans le réacteur secondaire (6).

4. Procédé selon la revendication 1, 2 ou 3,
**caractérisé en ce que**
le temps de séjour dans le réacteur secondaire (6) est au moins 10 fois, de préférence 50 à 100 fois, supérieur au temps de séjour dans le calcinateur (3).

5. Procédé selon la revendication 1,
**caractérisé en ce que**
la valeur de Blaine est augmentée à une valeur d'au

moins 6 000 $\dfrac{cm^2}{g}$ , de préférence de 7 000

$\dfrac{cm^2}{g}$ , par le broyage fin.

6. Procédé selon l'une quelconque des revendications 1 à 5,
**caractérisé en ce que**
l'air d'échappement du système est introduit dans le réacteur secondaire (6), et le réacteur secondaire (6) est au demeurant exploité non chauffé.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3181985 A
- DE 2160204 A
- EP 1547984 A1
- WO 9912861 A1